# DEMANDE DE BREVET EUROPEEN

(11) **EP 2 107 517 A1**
(43) Date de publication de la demande: **07.10.2009**
(21) Numéro de dépôt: 09156414.6
(22) Date de dépôt: 27.03.2009
(51) Int. Cl.: G06Q 10/00

(54) **Procédé de gestion de messages électroniques á partir d´un client de messagerie et système pour mettre en oeuvre le procédé**

(30) Priorité: 04.04.2008 FR 0852241
(71) Demandeur: Alcatel Lucent, 75008 Paris (FR)
(72) Inventeur: Anguenot, Olivier, 67400, ILLKIRCH (FR)
(74) Mandataire: Hedarchet, Stéphane

(57) **Abrégé**

L'invention concerne un procédé de gestion de messages électroniques présents dans une boîte de réception associée à un utilisateur (3) d'un client de messagerie (2) intégré dans un système de communication (1). Selon L'invention, pour chacun desdits messages électroniques, l'utilisateur (3) peut, à partir du client de messagerie (2), attacher une règle d'archivage consistant à définir d'une part, au moins une action parmi une liste d'actions dont la réalisation est susceptible d'être détectée par ledit système de communication (1), et d'autre part, une information relative à un emplacement (115, 215) dans ledit système de communication (1) vers lequel ledit message doit être déplacé lorsque ladite action est réalisée. Ledit message est effectivement déplacé vers ledit emplacement (115, 215) sur détection par ledit système de communication (1) des réalisation de l'action.

## Description

La présente invention se rapporte au domaine de la messagerie électronique, en particulier à un procédé de gestion de messages électroniques présents dans la boîte de réception d'un utilisateur d'un client de messagerie et à un système particulier pour la mise en oeuvre du procédé.

Si initialement l'usage de la messagerie électronique était destiné à l'échange de messages professionnels au sein d'un réseau d'entreprise, elle est aujourd'hui également utilisée non seulement dans un but personnel mais aussi pour véhiculer toutes sortes d'annonces publicitaires. Les objets et les sources des messages pouvant être de toute sorte, des outils de filtrage ont donc naturellement été développés.

Une première catégorie d'outils de filtrage intervient directement sur le serveur de messagerie, ces outils étant principalement conçus pour supprimer automatiquement les messages considérés comme indésirables.

Une seconde catégorie d'outils de filtrage est associée à l'utilisation d'un client de messagerie tel que par exemple Outlook® ou Kmail. Ces outils permettent à un utilisateur, lors du chargement des messages depuis un serveur de messagerie par le client de messagerie, de trier les messages pour faciliter la consultation des messages reçus et visualisés sur le client de messagerie. Le filtrage se base notamment sur une analyse des champs « objet » et « source » des messages. Ainsi, dès leur chargement par le client de messagerie, les messages peuvent être orientés dans un dossier particulier du client de messagerie en fonction de règles de tri que l'utilisateur aura préalablement créées.

Cependant, lorsqu'une règle de tri est définie par un utilisateur à partir de son client de messagerie, elle s'appliquera à tous les futurs messages que l'utilisateur recevra sans que l'utilisateur ne puisse considérer le contenu du message. Pour cette raison, ces outils de tri sont souvent uniquement utilisés pour trier les messages dont on pense a priori qu'ils n'ont aucune pertinence ou importance.

Or, la pertinence des messages reçus est, pour un grand nombre d'entre eux, évolutive en ce sens que les messages peuvent être importants durant une certaine période de temps de durée variable, puis devenir obsolètes.

Certains clients de messagerie prennent en compte cette notion d'obsolescence des messages et proposent à l'utilisateur des outils d'archivage automatique des messages présents dans la boîte de réception d'un client de messagerie. A l'aide de ces outils, l'utilisateur peut créer un emplacement spécifique vers lequel tous les messages présents dans la boîte de réception du client de messagerie reçus avant une certaine date seront automatiquement déplacés. Il n'est donc pas possible, avec de tels outils, d'archiver chaque message dans un dossier particulièrement adapté au contenu ou au sujet du message.

De plus, les critères d'importance et d'obsolescence ne sont généralement pas uniquement fonction de la date de réception du message. Plus précisément, certains messages peuvent être jugés importants par l'utilisateur tant que certaines tâches induites par le contenu du message n'ont pas été effectuées.

Ainsi, sur réception et lecture du message, l'utilisateur peut décider, à titre d'exemples non limitatifs, qu'il faut contacter une personne par e-mail, par téléphone ou par fax, ou bien effectuer une modification sur un fichier géré dans le système de communication, ou encore planifier une réunion.

Or, l'utilisateur recevant un tel message, n'effectue généralement pas une action directement après la réception et la lecture du message. L'utilisateur est donc contraint de se rappeler de la tâche qu'il a à effectuer alors que de nouveaux messages lui arrivent régulièrement. D'autre part, lorsque la tâche aura été réalisée, le message ayant induit la nécessité d'effectuer cette tâche sera perdu dans la masse des messages reçus sur le client de messagerie entre la première lecture du message par l'utilisateur et la réalisation de la tâche. Si l'utilisateur ne veut pas une accumulation gênante des messages dans sa boîte de réception, il sera obligé de retrouver le message relatif à la tâche parmi l'ensemble des messages de sa boîte de réception et effectuer un archivage manuel. Cette démarche est non seulement fastidieuse mais elle fait également perdre beaucoup de temps à l'utilisateur.

La présente invention vise à améliorer la gestion des messages électroniques d'un utilisateur en permettant à un message présent dans la boîte de réception d'un client de messagerie d'être archivé à un instant opportun et vers un emplacement particulièrement adapté au contenu du message.

La présente invention part du constat que la plupart des tâches qui peuvent être induites par le contenu d'un message électronique peuvent être accomplies en utilisant des parties du système de communication auquel le client de messagerie appartient.

Ainsi, un premier objet de l'invention concerne un procédé de gestion de messages électroniques présents dans une boîte de réception associée à un utilisateur d'un client de messagerie intégré dans un système de communication **caractérisé en ce que**, pour chacun desdits messages électroniques, l'utilisateur peut, à partir du client de messagerie, attacher une règle d'archivage consistant à définir d'une part, au moins une action parmi une liste d'actions dont la réalisation est susceptible d'être détectée par ledit système de communication, et d'autre part, une information relative à un emplacement dans ledit système de communication vers lequel ledit message doit être déplacé lorsque ladite action est réalisée, et en ce que ledit message est effectivement déplacé vers ledit emplacement sur détection par ledit système de communication de la réalisation de l'action.

Un second objet de l'invention concerne un système de communication comprenant un client de messagerie pour la gestion des messages électroniques présents dans une boîte de réception associée à un utilisateur dudit client de messagerie **caractérise en ce que**, ledit client de messagerie comprend des moyens pour permettre l'utilisateur, pour chacun desdits messages électroniques, d'attacher une règle d'archivage consistant à définir d'une part, au moins une action parmi une liste d'actions dont la réalisation est susceptible d'être détectée par ledit système de communication, et d'autre part, une information relative à un emplacement dans ledit système de communication vers lequel ledit message doit être déplacé lorsque ladite action est réalisée, et en ce que, le système de communication comprend, de plus, des moyens de détection pour détecter que l'action attachée au dit message a été réalisée, et des moyens de génération d'une commande d'archivage pour déplacer ledit message vers ledit emplacement sur détection de la réalisation de l'action.

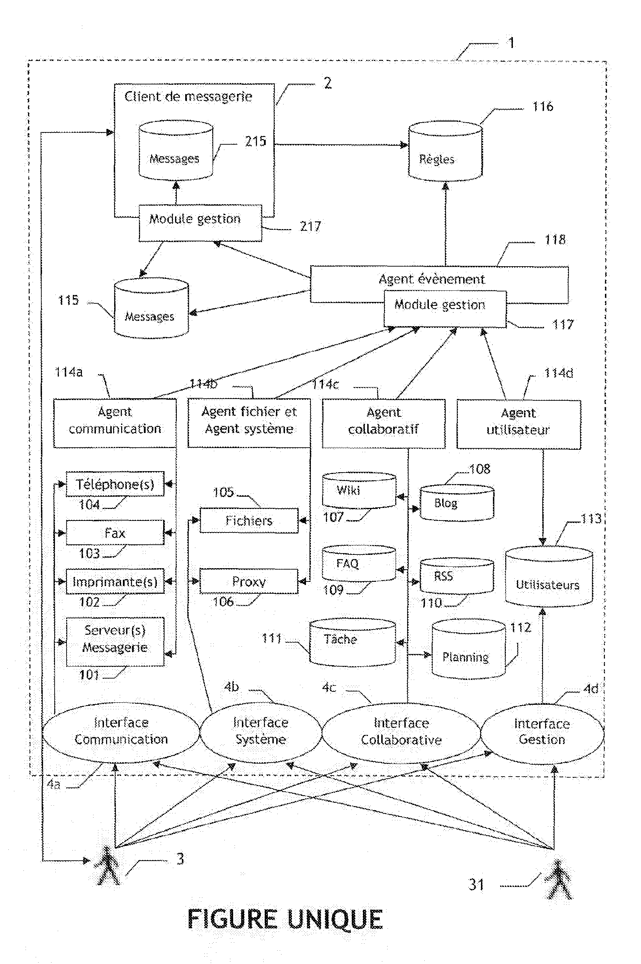

D'autres caractéristiques et avantages de l'invention apparaîtront à la lecture de la description qui va suivre en référence à la figure unique annexée.

L'unique figure représente schématiquement une architecture préférée d'un système de communication particulièrement adapté à un réseau d'entreprise.

Comme le montre la figure, le système de communication 1 comporte un client de messagerie 2 capable de gérer les messages électroniques d'une pluralité d'utilisateurs du système de communication 1. Dans la suite, on expliquera la gestion de messages électroniques présents dans la boîte de réception d'un utilisateur 3 particulier, les autres utilisateurs du système de communication 1 étant représentés sur la figure par la référence 31.

De plus, le système de communication 1 étant intégré dans un réseau d'entreprise, il comporte généralement différents moyens de communication tels que notamment :
- un ou plusieurs serveurs de messagerie 101 permettant aux utilisateurs 3, 31 d'envoyer ou recevoir des messages électroniques ;
- une ou plusieurs imprimantes en réseau formant un système d'impression 102 permettant aux utilisateurs 3,31 d'imprimer un document ;
- un ou plusieurs fax formant un système de fax 103 permettant aux utilisateurs 3, 31 d'envoyer ou de recevoir des fax ;
- un ou plusieurs téléphones formant un système de téléphonie 104 permettant aux utilisateurs 3, 31 d'avoir des communications téléphoniques.

Le système de communication 1 peut également comprendre :
- un gestionnaire 105 de fichiers permettant aux utilisateurs 3, 31 notamment de modifier, déplacer ou supprimer des fichiers ;
- un gestionnaire 106 de connexion de réseaux aussi appelé système proxy permettant, entre autre, aux utilisateurs de naviguer sur des sites Internet ou Intranet et d'effectuer des téléchargements FTP.

Le système de commumcation 1 peut comporter également des moyens de gestion d'application collaboratives tels que notamment :
- des bases de données 107, 108, 109 permettant l'enregistrement de données relatives à des pages Wiki, des FAQ collaboratifs ou des blogs hébergés ou non par le système de communication 1 ;
- une base de données 110 permettant de stocker des informations relatives à des flux RSS émis par des applications collaboratives hébergées ou non par le système de communication 1 ;
- des bases de données 111, 112 permettant, entre autre, de stocker des informations relatives à des tâches ou des informations de planning partagées par différents utilisateurs 3, 31.

Le système de communication 1 étant partagé par plusieurs utilisateurs, il comporte généralement des moyens 113 de gestion des droits d'utilisation dudit système de communication 1 permettant d'associer, à chaque utilisateur 3, 31 du système de communication, 1 différentes caractéristiques telles que des droits de connexion, des droits d''utilisation des programmes ou des systèmes disponibles à l'intérieur du système de communication 1.

L'ensemble des éléments cités est régulièrement contrôlé par des agents 114a, 114b, 114c, 114d contrôlant principalement leur fonctionnement, leur présence et les différentes modifications qu'ils subissent.

Le système de communication comprend en outre un ensemble d'interfaces 4, 4b, 4c, 4d appelées respectivement interface de communication, interface système, interface collaborative et interface de gestion permettant d'une part, à un utilisateur 3, 31 du système d'accéder aux différents éléments précédemment décrits afin de pouvoir les utiliser, et permettant d'autre part, au système de communication 1 de s'interfacer avec des éléments externes au système de communication 1.

Comme précédemment mentionné, les différentes tâches induites par le contenu d'un message électronique reçu par un utilisateur spécifique 3 du client de messagerie 2, sont généralement réalisées au moyen d'un des nombreux éléments du système de communication 1.

Partant de ce constat, la présente invention propose de donner la possibilité à l'utilisateur 3 de pouvoir définir, pour chacun des messages présents dans sa boîte de réception, une règle d'archivage grâce à laquelle il pourra définir au moins une action parmi une liste d'actions dont la réalisation peut être détectée par le système de communication, et un emplacement de destination vers lequel le message sera effectivement déplacé sur détection de la réalisation de l'action.

Lorsque l'utilisateur 3 désire consulter ses messages, il lance le client de messagerie 2. Une interface de visualisation (non représentée) du client de messagerie 2 permet alors d'afficher l'ensemble de ses messages qui ont été stockés soit dans une base de données 215 interne au client de messagerie 2, soit dans une base de données 115 externe au client de messagerie 2. Les messages sont organisés classiquement par dossier et les nouveaux messages, chargés par le client de messagerie 2 depuis un serveur de messagerie interne ou externe au système de communication 1, apparaissent dans le dossier communément appelé boîte de réception.

Le client de messagerie 2 permet, entre autre, à l'utilisateur de sélectionner un message dans la boîte de réception pour effectuer un transfert, une lecture ou un déplacement du message vers un autre dossier du client de messagerie. Conformément à l'invention le client de messagerie 2 permet également pour un tel message sélectionné de lui attacher une règle d'archivage constituée d'une action et d'une information relative à un emplacement.

Plus précisément, lorsque l'utilisateur sélectionne un message dans sa boîte de réception, le client de messagerie 2 pourra lui proposer d'attacher une règle d'archivage conforme à l'invention. Cette proposition pourra notamment apparaître sous la forme d'un menu déroutant tors de la sélection du message dans la liste des messages de la boîte de réception ou de façon plus appropriée, au moyen d'un onglet présent lorsque le contenu du message sera affiché par l'interface de visualisation du client de messagerie 2.

Lorsque la fonction d'archivage est activée par l'utilisateur 3, le client de messagerie 2 ouvre une fenêtre d'interaction ou une boîte de dialogue permettant à l'utilisateur 3 de saisir une action ainsi qu'une information relative à un emplacement 115, 215. De façon préférée, il peut être associé à la fenêtre d'interaction ou à la boîte de dialogue une première liste d'actions par défaut et une seconde liste d'informations d'emplacement par défaut. L'utilisateur peut alors créer sa règle d'archivage en saisissant lui-même au moins une action et une information d'emplacement ou en sélectionnant au moins une action et une information d'emplacement parmi les listes qui lui sont proposées par le client de messagerie 2.

Comme cela a été indiqué précédemment, les actions sont à choisir parmi une liste d'actions dont la réalisation peut être détectée par le système de communication.

Ainsi, il peut s'agir d'une action réalisée en utilisant n'importe lequel des moyens de communication 101,..., 104. Auquel cas l'action de la règle d'archivage pourra être notamment l'une des actions suivantes :
- envoi ou réception d'un message électronique par un utilisateur 3, 31 dudit système de communication 1 au moyen desdits serveurs de messagerie 101 ;
- impression d'un document par un utilisateur 3, 31 dudit système de communication 1 en utilisant l'une des imprimantes dudit système d'impression 102 ;
- envoi ou réception d'un fax par un utilisateur 3, 31 dudit système de communication 1 en utilisant l'un des fax dudit système d'envoi/réception de fax 103 ;
- ou émission/réception d'un appel téléphonique par un utilisateur 3, 31 dudit système de communication 1 au moyen dudit système de téléphonie 104.

En variante ou en combinaison, il peut s'agir d'une action réalisée en utilisant le gestionnaire 115 de fichiers. Dans ce cas, les actions suivantes pourront être ajoutées à la liste des actions :
- utilisation ou la mise à jours d'un fichier présent dans le système de communication 1 par un utilisateur 3, 31 dudit système de communication 1 ;
- déplacement d'un fichier d'un premier emplacement vers un second emplacement du système de communication 1 par un utilisateur 3, 31 dudit système de communication 1 ;
- dépassement d'une limite de stockage d'un module de stockage de fichiers du système de communication 1 ;

En variante ou en combinaison, il peut s'agir d'une action réalisée en utilisant le gestionnaire 116 de connexions de réseaux. Dans ce cas, les actions suivantes pourront être ajoutées à la liste des actions :
- accès à une page Internet depuis ledit système de communication 1 par un utilisateur 3, 31 dudit système de communication 1 ;
- accès à une page Intranet hébergée par ledit système de communication 1 par un utilisateur 3, 31 dudit système de communication 1 ;
- réalisation d'un transfert FTP par un utilisateur quelconque 3, 31 dudit système de communication 1.

En variante ou en combinaison, il peut s'agir d'une action réalisée en utilisant les moyens 107, ..., 112 de gestion d'applications collaboratives hébergées ou non par le système de communication 1. Dans ce cas, les actions suivantes pourront être ajoutées à la liste des actions :
- mise à jour d'une page d'une application collaborative par un utilisateur 3, 31 du système de communication 1 dans le cas d'une application collaborative hébergée par ledit système de communication 1;
- mise à jour d'une page d'une application collaborative hébergée en dehors du système de communication 1 ;

En variante ou en combinaison, il peut s'agir d'une action réalisée en utilisant les moyens 113 de gestion des droits d'utilisation du système de communication 1. Dans ce cas, les actions suivantes pourront être ajoutées à la liste des actions :
- modification de la base de données des droits utilisateurs par un utilisateur 3, 31 dudit système de communication 1 ;

Le système de communication 1 pouvant être utilisé par plusieurs utilisateurs 31 autres que l'utilisateur 3 ayant attaché une règle d'archivage à l'un de ses messages présents dans sa boîte de réception, il est intéressant que l'utilisateur 3 désireux d'archiver son message puisse préciser s'il veut lui-même faire l'action ou si l'action peut être effectuée par un autre utilisateur 31 du système de communication 1. De façon préférée, la règle d'archivage est fonction en outre de l'utilisateur qui doit réaliser ladite action dans le système de communication 1. L'utilisateur qui doit réaliser l'action est choisi parmi l'utilisateur 3 auquel la boîte de réception est associée ou d'autres utilisateurs 31 dudit système de communication 1. Une telle précision permettra d'éviter des situations telles que notamment l'archivage d'un message lors de l'impression ou de la modification d'un document par un collègue 31 de l'utilisateur 3 ayant défini la règle d'archivage alors que ce dernier voulait déclencher réellement l'archivage une fois seulement qu'il avait effectué l'action par lui-même.

De façon avantageuse, ladite liste d'actions est fonction d'un profil de l'utilisateur 3, 31 qui doit réaliser l'action, ledit profil définissant les droits d'utilisation des programmes ou des systèmes disponibles sur le système de communication (1). Ce mode de réalisation préféré a pour but d'empêcher un utilisateur 3, lors de la création de la règle d'archivage, d'associer une action à réaliser par un utilisateur 3, 31 du système de communication 1 qui n'a pas les droits système pour effectuer une telle action à partir du système de communication 1. L'action ne pouvant pas être effectuée, elle ne serait jamais détectée et donc le message ne serait jamais archivé.

Une fois la règle d'archivage saisie, elle est attachée au message. Cette étape peut être, entre autre, réalisée par le module de gestion d'événement 217 du client de messagerie 2. Avantageusement, le module de gestion d'événement 217 ajoute également une information visuelle au message afin que l'utilisateur 3, visualisant la liste des messages présents dans sa boîte de réception à partir de l'interface de visualisation du client de messagerie 2, puisse aisément identifier un message auquel une règle d'archivage a été attachée.

Périodiquement ou lors de la fermeture du client de messagerie 2 par l'utilisateur 3, la règle d'archivage est transmise au système de communication 1 pour être stockée dans une base de données 116.

Le message sera déplacé lorsque l'action contenue dans la règle d'archivage sera détectée par le système de communication 1. La détection de la réalisation d'une action est rendue possible par l'utilisation des différents agents 114a à 114d précités contrôlant les différents moyens du système de communication.

Plus précisément, lorsque l'action attachée au message est une action réalisée par l'un des moyens de communication 101, ...,104, les agents de communications 114a dédiés notamment au contrôle desdits moyens de communication sont, conformément à l'invention, également utilisés pour analyseur les utilisations de ces moyens. L'analyse régulière par de tels agents 114a permet de détecter les événements effectués sur ces moyens. Les événements ainsi détectés sont transmis à un module de gestion d'évènement 117, 118 du système de communication dont le fonctionnement sera décrit ultérieurement.

Si l'action attachée au message est reliée à l'utilisation du gestionnaire 115 de fichiers ou du gestionnaire 116 de connexions de réseaux, le système de communication 1 pourra utiliser, pour détecter la réalisation de l'action, les agents 114b appelés agents de fichiers et agents système dédiés notamment respectivement au traçage de chaque utilisation ou modification d'un fichier stocké dans le système de communication et au contrôle des accès réseaux.

Ainsi, lorsqu'un utilisateur 3, 31 du système de communication 1 modifie une version d'un fichier ou utilise des accès réseaux, les agents 114b détectent de tels évènements et les transmettent au module de gestion d'évènement 117, 118 du système de communication 1.

L'action de la règle d'archivage peut être également une action liée à l'utilisation des moyens 113 de gestion des droits d'utilisation du système de communication 1. Auquel cas le système de communication 1 pourra utiliser, pour détecter la réalisation de l'action, les agents utilisateurs 114d contrôlant les informations de la base 113 de gestion des utilisateurs 3, 31. Les modifications de données sur la base 113 de gestions des utilisateurs telles que notamment la modification d'un identifiant, d'un mot de passe de connexion, ou des droits d'utilisation attachés à un utilisateur 3, 31 sur ladite base sera détectée et transmise au module de gestion d'évènements 117, 118 du système de communication 1.

De façon analogue, si l'action attachée au message est relative à l'utilisation des de moyens de gestion 107, ..., 112 d'applications collaboratives hébergées ou non par le système de communication 1, chaque modification de données, dans l'une des bases de données comprenant des informations relatives aux applications collaboratives, est détectée par un des agents collaboratifs 114c correspondant.

Par exemple, lorsqu'un utilisateur effectue une modification sur une page Wiki, sur un blog ou alimente un FAQ collaboratif, les données stockées dans les bases de données 107, 108, 109 contenant les informations nécessaires à ces pages sont modifiées en conséquence. De même lorsque le système de communication est adapté pour recevoir et analyser des flux RSS de la part de site Internet ou Intranet, les données de la base de données 110 de gestion des flux RSS est modifiée. Chaque modification correspondant à la mise à jour d'une application collaborative, une information concernant un tel événement est alors transmise par l'agent 114c au module de gestion d'événement 117, 118 du système de communication 1.

Dans les exemples de détection de la réalisation d'une action décrits jusqu'ici la réalisation de l'action était effectuée à l'intérieur du système de communication. Or it est possible, notamment dans le cas où l'action est la mise à jour d'une page d'une application collaborative hébergée en dehors du système de communication, que la réalisation de l'action s'effectue en dehors du système de communication 1. Dans de tels cas, certains des agents collaboratifs 114c peuvent être paramétrés de façon à contrôler périodiquement des modifications sur des sites externes hébergeant des applications collaboratives et ainsi détecter la mise à jour de telles applications même si elles ne sont pas hébergées par le système de communication 1. De tels agents 114c peuvent également être utilisés pour scruter des données échangées entre le système de communication 1 et des systèmes externes en liaison avec ledit système de communication 1. L'analyse des données échangées pouvant permettre de détecter la réalisation d'une action extérieure au système de communication 1.

Une fois les évènements transmis par les différents agents 114a, ..., 114d au module de gestion d'évènement 117, 118, celui-ci détermine si une action reçue correspond à une action d'une des règles d'archivage stockée dans la base de données 116. Une telle détermination peut être réalisée au moyen d'un agent d'évènement 118 du module de gestion d'évènement 117, 118 qui effectue une comparaison des actions transmises au module de gestion d'évènement 117, 118 et des actions des règles d'archivage stockées dans la base de donnée 116.

Lorsqu'il est déterminé qu'une action réalisée coïncide avec une action d'une règle d'archivage préalablement attachée à un message par l'utilisateur 3, le module de gestion d'évènement 117, 118 génère une commande d'archivage du message associé à la règle d'archivage dont l'action a été réalisée. La commande est générée en tenant compte de l'information relative à l'emplacement associée au message.

Lorsque plusieurs actions ont été saisies par l'utilisateur 3 lors de la création de la règle d'archivage, il est nécessaire que l'ensemble de ces actions ait été effectué. Ces actions n'étant pas forcément réalisées simultanément, le module de gestion d'évènement 117, 118 est capable de vérifier si d'autres actions sont comprises dans la règle d'archivage. Si tel est le cas, le module de gestion d'évènement 117, 118 est également capable de déterminer si les autres actions ont déjà été réalisées ou au contraire si leur réalisation n'a pas encore eu lieu.

Ainsi, le module de gestion d'évènement 117, 118 ne génère la commande d'archivage que lorsque l'ensemble des actions comprises dans la règle d'archivage a été réalisé.

La commande d'archivage est alors transmise vers le module 217 de gestion d'évènement propre au client de messagerie 2 qui est capable, sur réception d'une telle commande de mettre à jour la base de stockage 115, 215 des messages afin que le message soit déplacé vers remplacement 115, 215 indiqué dans la commande, l'emplacement pouvant correspondre à un emplacement 115 externe au client de messagerie ou à un emplacement 215 interne au client de messagerie 2.

Lorsque le message devant être déplacé est, d'une part, déjà stocké dans une base de données externe 115, et que d'autre part, l'emplacement indiqué dans la commande d'archivage est un emplacement 115 externe au client de messagerie, le module 117, 118 de gestion d'évènement du système de communication 1 peut mettre à jour la base de données externe 115 sans nécessiter de transmettre la commande d'archivage au module du gestion d'évènement 217 interne au client de messagerie.

Au niveau de l'interface de visualisation des messages du client de messagerie 2, l'archivage du message se traduit, par une disparition du message de la liste des messages de la boîte de réception et de son apparition dans un dossier relié au nouvel emplacement du message.

Avantageusement, une marque distinctive est ajoutée par le module de gestion d'événement 217 du client de messagerie 3 au message déplacé. Cette marque permet alors à l'utilisateur 1 de non seulement s'apercevoir qu'un archivage automatique a eu lieu mais aussi de comprendre la raison de la présence du message dans un dossier.

Dans un mode de réalisation préférée de l'invention, l'utilisateur 3 ayant préalablement attaché une action à un de ses messages reçus peut, tant que l'action n'a pas été réalisée, détacher ou modifier l'action à partir du client de messagerie 2.

Bien que les différentes caractéristiques et avantages de l'invention aient été décrits en se référant à un système de communication 1 intégré dans un réseau d'une entreprise, l'invention n'est pas limitée à un tel système de communication. L'invention peut également être implémentée dans un système de communication beaucoup plus simple comprenant un unique ordinateur personnel connecté à une imprimante et/ou un fax, et/ou un téléphone et/ou possédant une connexion internet.

## Revendications

1. Procédé de gestion de messages électroniques présents dans une boîte de réception associée à un utilisateur (3) d'un client de messagerie (2) intégré dans un système de communication (1), **caractérisé en ce que**, pour chacun desdits messages électroniques, l'utilisateur (3) peut, à partir du client de messagerie (2), attacher une règle d'archivage consistant à définir d'une part, au moins une action parmi une liste d'actions dont la réalisation est susceptible d'être détectée par ledit système de communication (1), et d'autre part, une information relative à un emplacement (115, 215) dans ledit système de communication (1) vers lequel ledit message doit être déplacé lorsque ladite action est réalisée, et **en ce que** ledit message est effectivement déplacé vers ledit emplacement (115, 215) sur détection par ledit système de communication (1) de la réalisation de l'action.

2. Procédé de gestion selon la revendication 1, **caractérisé en ce que**, le système de communication (1) comportant des moyens de communication tels que notamment un serveur de messagerie (101), un système d'impression (102), un système d'envoi/réception de fax (103) et/ou un système de téléphonie (104), ladite liste d'actions comprend notamment les actions suivantes :
- envoi ou réception d'un message par un utilisateur (3, 31) dudit système de communication (1) au moyen dudit serveur de messagerie (101);
- impression d'un document par un utilisateur (3, 31) dudit système de communication (1) au moyen dudit système d'impression (102) ;
- envoi ou réception d'un fax par un utilisateur (3, 31) dudit système de communication (1) au moyen dudit système d'envoi/réception de fax (103);
- ou émission/réception d'un appel teléphonique par un utilisateur (3, 31) dudit système de communication (1) au moyen dudit système de téléphonie (104).

3. Procédé de gestion selon l'une quelconque de revendications 1 ou 2, **caractérisé en ce que,** le système de communication (1) comportant un gestionnaire (105) de fichiers, ladite liste d'actions comprend notamment les actions suivantes :
- utilisation ou la mise à jours d'un fichier présent dans le système de communication (1) par un utilisateur (3, 31) dudit système de communication (1) ;
- déplacement d'un fichier d'un premier emplacement vers un second emplacement du système de communication (1) par un utilisateur (3, 31) dudit système de communication (1) ;
- dépassement d'une limite de stockage d'un module de stockage de fichiers du système de communication (1).

4. Procédé de gestion selon l'une quelconque de revendications précédentes, **caractérisé en ce que,** le système de communication (1) comportant un gestionnaire (106) de connexion de réseaux, ladite liste d'actions comprend notamment les actions suivantes :
- accès à une page Internet depuis ledit système de communication (1) par un utilisateur (3, 31) dudit système de communication (1) ;
- accès à une page Intranet hébergée par ledit système de communication (1) par un utilisateur (3, 31) dudit système de communication (1) ;
- réalisation d'un transfert FTP par un utilisateur quelconque (3, 31) dudit système de communication (1).

5. Procédé de gestion selon l'une quelconque des revendications précédentes, **caractérisé en ce que**, le système de communication (1) comportant des moyens (113) de gestion des droits d'utilisation dudit système de communication (1), ladite liste d'actions comprend notamment l'action de modification de la base de données des droits utilisateurs par un utilisateur (3, 31) dudit système de communication (1) ;

6. Procédé de gestion selon l'une quelconque des revendications précédentes, **caractérisé en ce que,** le système de communication (1) comportant des moyens (107, ....., 112) de gestion d'applications collaboratives hébergés ou non par le système de communication (1), Ladite liste d'actions comprend notamment les actions suivantes :
- mise à jour d'une page d'une application collaborative par un utilisateur (1, 11) du système de communication (1) dans le cas d'une application collaborative hébergée par ledit système de communication (1);
- mise à jour d'une page d'une application collaborative hébergée en dehors du système de communication (1) ;

7. Procédé de gestion selon l'une quelconque des revendications précédentes, **caractérisé en ce que** la règle d'archivage est fonction en outre de l'utilisateur qui doit réaliser ladite action dans le système de communication (1), choisi parmi l'utilisateur (3) auquel la boîte de réception est associée ou à d'autres utilisateurs (31) dudit système de communication (1).

8. Procédé de gestion selon la revendication 7, **caractérisé en ce que** ladite liste d'actions est fonction d'un profil de l'utilisateur (3, 31) qui doit réaliser l'action, ledit profil définissant les droits d'utilisation des programmes ou des systèmes disponibles sur le système de communication (1).

9. Procédé de gestion selon l'une quelconque des revendications précédentes, **caractérisé en ce que**, une fois que ledit message est déplacé vers ledit emplacement, une marque distinctive est ajoutée audit message permettant de le différencier des autres messages.

10. Système de communication (1) comprenant un client de messagerie (2) pour la gestion des messages électroniques présents dans une boîte de réception associée à un utilisateur (3) dudit client de messagerie (2), **caractérise en ce que**, ledit client de messagerie (2) comprend des moyens (217) pour permettre à l'utilisateur (3), pour chacun desdits messages électroniques, d'attacher une règle d'archivage consistant à définir d'une part, au moins une action parmi une liste d'actions dont la réalisation est susceptible d'être détectée par ledit système de communication (1), et d'autre part, une information relative à un emplacement (115, 215) dans ledit système de communication (1) vers lequel ledit message doit être déplacé lorsque ladite action est réalisée, et **en ce que**, le système de communication (1) comprend, de plus, des moyens de détection (114a, 114b, 114c, 114d) pour détecter que l'action attachée au dit message a été réalisée, et des moyens (117, 118) de génération d'une commande d'archivage pour déplacer ledit message vers ledit emplacement sur détection de la réalisation de l'action.
